# DEMANDE DE BREVET EUROPEEN

(11) **EP 1 470 960 A1**
(43) Date de publication de la demande: **27.10.2004**
(21) Numéro de dépôt: 04290878.0
(22) Date de dépôt: 02.04.2004
(51) Int. Cl.: B60R 9/045

(54) **Ensemble de barres de toit pour un véhicule automobile**

(30) Priorité: 23.04.2003 FR 0304984
(71) Demandeur: Peugeot Citroen Automobiles SA, 78140 Vélizy Villacoublay (FR)
(72) Inventeur: Reine, Frédéric, 78490 Montford l'Amaury (FR); Cadoret, Laurent, 95230 Soisy sous Montmorency (FR); Bodilis, Jean-Claude, 94600 Choisy le Roi (FR)
(74) Mandataire: Lanceplaine, Jean-Claude

(57) **Abrégé**

L'invention concerne un ensemble (10) de barres de toit pour véhicule automobile comprenant deux barres de toit (23, 33) comportant une partie centrale (21, 31) et une partie d'extrémité (22, 32) formant pied de fixation sur un pavillon du véhicule dans une position parallèle à l'axe longitudinal de ce véhicule. La partie centrale de chaque barre de toit (20, 30) supporte un élément (23, 33) démontable et déplaçable entre une première position intégrée dans ladite partie centrale correspondante et après pivotement d'un quart de tour, une seconde position s'étendant transversalement entre les barres de toit (20, 30). Les éléments (23,33) forment, dans la seconde position, une surface plane.

## Description

La présente invention concerne un ensemble de barres de toit pour un véhicule automobile.

On connaît les ensembles de barres de toit destinés à être montés sur le dessus d'un pavillon d'un véhicule automobile et qui comprennent deux barres de toit comportant une partie centrale et, à chaque extrémité, une partie formant pied de fixation sur le pavillon.

Certains véhicules automobiles sont équipés de barres de toit longitudinales s'étendant parallèlement à l'axe longitudinal et ces barres de toit sont montées à demeure pour servir de support à des éléments transversaux pour la fixation par exemple d'une galerie, d'un coffre de voyage ou d'autres accessoires.

Généralement les éléments transversaux sont démontables et se fixent au moyen de pinces, de vis et d'écrous sur les barres de toit longitudinales. De ce fait, ils sont longs à mettre en place et prennent de la place dans le véhicule ou dans un lieu de stockage lorsqu'ils ne sont pas utilisés.

L'invention a pour but de proposer un ensemble de barres de toit qui évite les inconvénients précédemment mentionnés et qui offre pour l'utilisateur une multitude de positions de réglage en fonction des charges à transporter.

L'invention a donc pour objet un ensemble de barre de toit pour un véhicule automobile comprenant deux barres de toit comportant une partie centrale et, à chaque extrémité, une partie formant pied de fixation sur un pavillon du véhicule dans une position parallèle à l'axe longitudinal de ce véhicule, caractérisé en ce que la partie centrale de chaque barre de toit supporte un élément démontable et déplaçable entre une première position intégrée dans la partie centrale correspondante et après pivotement d'un quart de tour une seconde position s'étendant transversalement entre les barres de toit perpendiculairement à l'axe longitudinal du véhicule, lesdits éléments formant, dans la seconde position, une surface plane.

Selon d'autres caractéristiques de l'invention :
- les éléments sont déplaçables, dans la seconde position, par coulissement sur les parties centrales pour régler l'écartement en fonction de la charge transportée,
- la partie centrale de chaque barre de toit comporte un logement de forme complémentaire à l'élément correspondant,
- le logement de la partie centrale de chaque barre de toit présente une section transversale en forme de "L" comportant un bord extérieur longitudinal et un fond,
- le fond de chaque logement comporte une rainure longitudinale,
- chaque élément comporte, à chacune de ses extrémités, une platine munie de deux orifices s'étendant perpendiculairement l'un par rapport à l'autre et reliée à la partie centrale de chaque barre de toit par un organe de liaison,
- l'organe de liaison est formé par un écrou disposé dans la rainure du logement correspondant et par une vis traversant l'un des orifices de la platine de l'élément et destinée à coopérer avec ledit écrou,
- le fond de chaque logement comporte une butée de limitation du coulissement de la platine de l'élément correspondant.

L'invention sera mieux comprise à la lecture de la description qui va suivre, donnée à titre d'exemple et faite en référence aux dessins annexés, sur lesquels :
- la Fig. 1 est une vue schématique en perspective d'un ensemble de barres de toit, conforme à l'invention, pour un véhicule automobile,
- la Fig. 2 est une vue schématique en perspective des barres de toit de la Fig. 1 en position d'utilisation,
- la Fig. 3 est une vue schématique en coupe selon la ligne 3-3 de la Fig. 2,
- la Fig. 4 est une vue schématique en coupe selon la ligne 4-4 de la Fig. 2,
- la Fig. 5 est une vue schématique en coupe selon la ligne 5-5 de la Fig. 2.

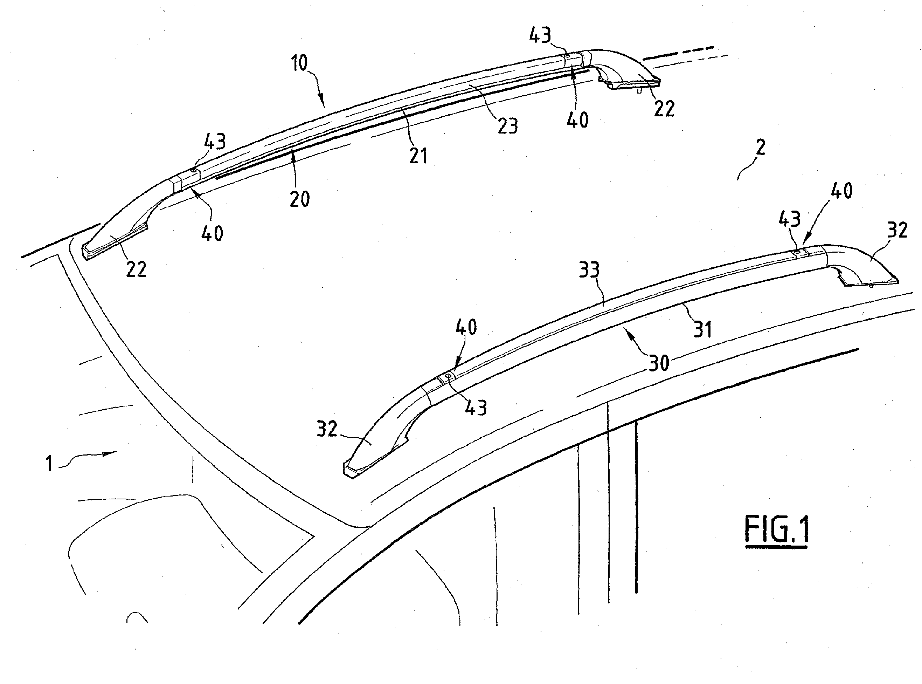

Sur la Fig. 1, on a représenté schématiquement un ensemble de barres de toit désigné par la référence générale 10 et qui est destiné à être monté sur un pavillon 2 d'un véhicule automobile 1.

L'ensemble de barres de toit 10 comporte deux barres de toit, respectivement 20 et 30, destinées à être fixées dans une position parallèle à l'axe longitudinal du véhicule automobile. Chaque barre de toit 20 et 30 présente un profil longitudinal bombé pour s'intégrer à la forme générale du pavillon du véhicule.

La première barre de toit 20 comporte une partie centrale 21 et, à chaque extrémité, une partie 22 formant pied de fixation sur le pavillon 2. De même, la seconde barre de toit 30 comporte une partie centrale 31 et, à chaque extrémité, une partie 32 formant pied de fixation sur le pavillon 2.

Selon une variante, chaque barre de toit 20 et 30 peut comporter un pied milieu d'appui sur ledit pavillon 2.

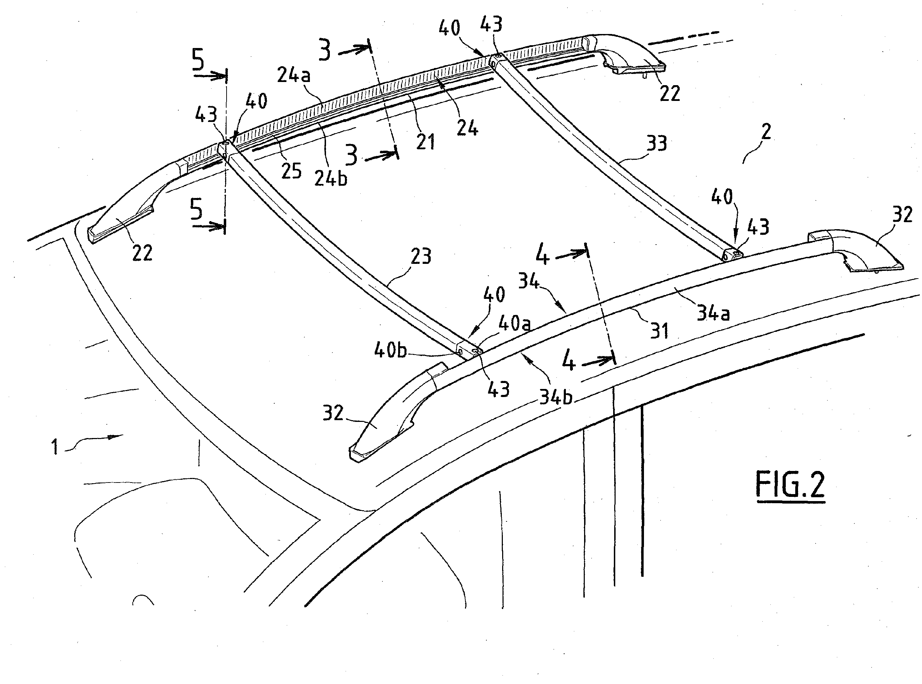

La partie centrale 21 de la barre de toit 20 supporte un élément 23 démontable et déplaçable entre une première position intégrée dans la partie centrale 21 (Fig. 1) et , après pivotement d'un quart de tour, une seconde position s'étendant transversalement entre les barres de toit 20 et 30 perpendiculairement à l'axe longitudinal du véhicule (Fig.2).

La partie centrale 31 de la barre de toit 30 supporte aussi un élément 33 démontable et déplaçable entre une première position intégrée dans cette partie centrale 31 (Fig. 1) et après pivotement d'un quart de tour une seconde position s'étendant transversalement entre les barres de toit 20 et 30 perpendiculairement à l'axe longitudinal du véhicule (Fig. 2).

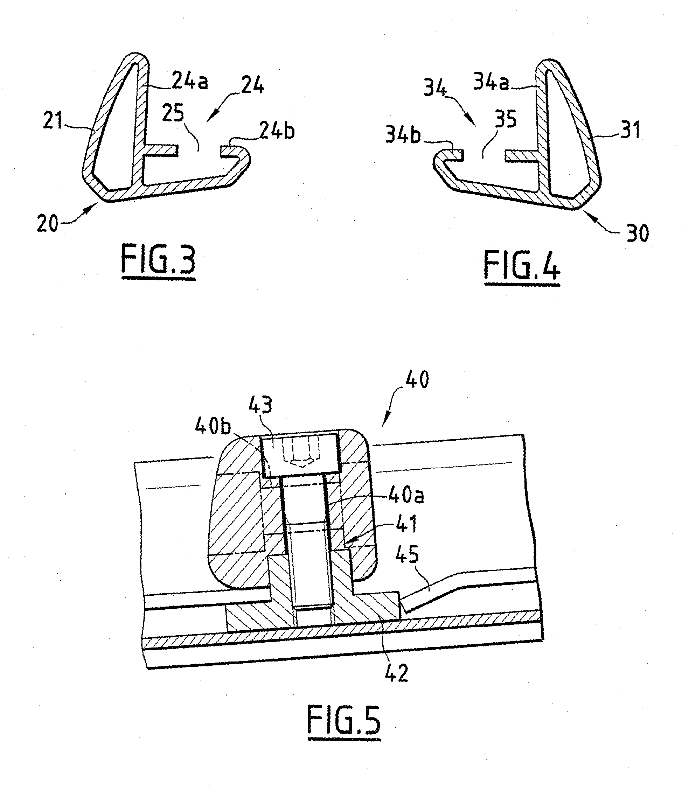

Ainsi que montré sur les Figs. 2 et 3, la partie centrale 21 de la barre de toit 20 est munie d'un logement 24 de forme complémentaire à l'élément 23. Ce logement 24 présente une section transversale en forme de "L" comportant un bord extérieur 24a longitudinal et un fond 24b muni d'une rainure longitudinale 25.

La partie centrale 31 de la barre de toit 30 comporte un logement 34 (Figures 2 et 4) de forme complémentaire à l'élément 33. Ce logement 34 présente une section transversale en forme de "L" comportant un bord extérieur 34a longitudinal et un fond 34b muni d'une rainure longitudinale 35.

Dans la seconde position, c'est-à-dire après pivotement d'un quart de tour de chaque élément 23 et 33, ces éléments forment une surface plane de chargement.

De plus, dans la seconde position, les éléments 23 et 33 sont déplaçables par coulissement sur les parties centrales 21 et 31 des barres de toit 20 et 30 de façon à régler l'écartement entre ces éléments 23 et 33 en fonction de la charge transportée.

Ainsi, chaque élément 23 et 33 est pourvu à chacune de ses extrémités d'une platine désignée dans son ensemble par la référence 40 qui permet la fixation de chaque élément 23 et 33 sur les parties centrales 21 et 31 dans les première et seconde positions ainsi que le coulissement de ces éléments 23 et 33.

En se reportant maintenant à la Fig. 5, on va décrire une platine 40 d'une extrémité par exemple de l'élément 23, la platine 40 de l'autre extrémité de l'élément 23 ainsi que la platine des deux extrémités de l'élément 33 étant identiques.

Pour permettre la fixation de l'élément 23 dans la première position et dans la seconde position, la platine 40 comporte un premier orifice 40a et un second orifice 40b s'étendant perpendiculairement au premier orifice 40a et décalé longitudinalement par rapport à celui-ci, comme montré à la Figure 2. Dans chacune de ces positions la platine 40 est fixée par un organe de liaison 41 qui est formé par un écrou 42 disposé dans la rainure 25 du logement 24 et par une vis 43 traversant verticalement la platine 40 par l'orifice 40a ou 40b et destinée à coopérer avec l'écrou 42 pour bloquer l'élément 23 dans la position désirée ou pour permettre le coulissement de cet élément 23 en fonction du serrage de la vis 43 avec l'écrou 42.

Dans la position escamotée représentée à la Fig. 1, l'élément 23 est disposé dans le logement 21 de la barre de toit 20 et l'élément 33 est placé dans le logement 31 de la barre de toit 30, une vis 43 étant vissée dans un écrou 42 au niveau de chaque platine 40 en traversant l'orifice 40b.

Pour déployer les éléments 23 et 33 de l'ensemble de barres de toit 10, l'utilisateur procède par exemple de la façon suivante.

Tout d'abord, l'utilisateur desserre la vis 43 de chaque platine 40, puis il place chaque élément 23 et 33 transversalement par rapport aux barres de toit 20 et 30 en le faisant pivoter d'un quart de tour. Ensuite, il introduit une vis 43 dans l'orifice 40a de chaque platine 40 et la visse progressivement dans l'écrou 42 correspondant.

Avant de serrer les vis 43 des platines 40, l'utilisateur a la possibilité de régler l'écartement entre les éléments 23 et 33 en faisant glisser les écrous 42 dans les rainures 25 et 35 des parties centrales 21 et 31 des barres de toit 20 et 30 dans la position souhaitée. L'utilisateur serre les vis 43 de chaque des platines 40 de façon à fixer les éléments 23 et 33 sur les barres de liaison 20 et 30.

Selon une variante, le fond de chaque logement 24 et 34 de la partie centrale 21 et 31 des barres de toit 20 et 30 peut comporter des moyens d'arrêt du coulissement des platines 40 sur lesdits fonds de façon à limiter le rapprochement des éléments 23 et 33. Ces moyens sont constitués par exemple par des crevés 45 ou des languettes obtenus par découpage (Fig. 5) et ménagés dans ledit fond.

Dans la position transversale, les éléments 23 et 33 forment une surface plane de chargement.

L'ensemble de barres de toit selon l'invention permet donc de pouvoir transformer facilement et par des moyens simples deux barres de toit longitudinales en deux barres de toit transversales pour le transport de charges de longueurs variables.

## Revendications

1. Ensemble de barres de toit pour un véhicule automobile comprenant deux barres de toit (20, 30) comportant une partie centrale (21, 31) et, à chaque extrémité, une partie (22, 32) formant pied de fixation sur un pavillon (2) du véhicule dans une position parallèle à l'axe longitudinale de ce véhicule, **caractérisé en ce que** la partie centrale (21, 31) de chaque barre de toit (20, 30) supporte un élément (23, 33) démontable et déplaçable entre une première position intégrée dans la partie centrale (21, 31) correspondante et après pivotement d'un quart de tour une seconde position s'étendant transversalement entre les barres de toit (20, 30) perpendiculairement à l'axe longitudinal du véhicule, lesdits éléments (23, 33) formant dans la seconde position, une surface plane.

2. Ensemble de barres de toit selon la revendication 1, **caractérisé en ce que**, dans la seconde position, les éléments (23, 33) sont déplaçables par coulissement sur les parties centrales (21, 31) pour régler l'écartement en fonction de la charge transportée.

3. Ensemble de barres de toit selon les revendications 1 et 2, **caractérisé en ce que** la partie centrale (21, 31) de chaque barre de toit (20, 30) comporte un logement (24, 34) de forme complémentaire à l'élément (23, 33) correspondant.

4. Ensemble de barres de toit selon la revendication 3, **caractérisé en ce que** le logement (24, 34) de la partie centrale (21, 31) de chaque barre de toit (20, 30) présente une section transversale en forme de "L" comportant un bord extérieur (24a, 34a) longitudinal et un fond (24b, 34b).

5. Ensemble de barres de toit selon la revendication 3 ou 4, **caractérisé en ce que** le fond (24b, 34b) de chaque logement (24, 34) comporte une rainure (25, 35) longitudinale.

6. Ensemble de barres de toit selon l'une quelconque des revendications précédentes, **caractérisé en ce que** chaque élément (23, 33) comporte, à chacune de ses extrémités, une platine (40) munie de deux orifices (40a, 40b) s'étendant perpendiculairement l'un par rapport à l'autre et reliée à la partie centrale (21, 31) par un organe de liaison (41).

7. Ensemble de barres de toit selon la revendication 6, **caractérisé en ce que** l'organe de liaison (41) est formé par un écrou (42) disposé dans la rainure (25, 35) du logement (24, 34) correspondant et par une vis (43) traversant l'un des orifices (40a, 40b) de la platine (40) de l'élément (23, 33) et destinée à coopérer avec ledit écrou (42).

8. Ensemble de barres de toit selon l'une quelconque des revendications précédentes, **caractérisé en ce que** le fond (24b, 34b) de chaque logement (24, 34) comporte une butée (45) de limitation du coulissement de chaque platine (40) de l'élément (23, 33) correspondant.
